# EUROPÄISCHE PATENTANMELDUNG

(11) **EP 3 831 640 A1**
(43) Veröffentlichungstag der Anmeldung: **09.06.2021**
(21) Anmeldenummer: 20210593.8
(22) Anmeldetag: 30.11.2020
(51) Int. Cl.: B60L 7/18, B60L 15/20, B60L 3/00, B60T 1/10, B60T 13/58, B61C 3/02, B61H 9/06, H02J 7/14, B61D 43/00

(54) **ELEKTRISCHES SYSTEM ZUR ENERGIEVERSORGUNG IN EINEM FAHRZEUG, FAHRZEUG UND VERFAHREN ZUM BETREIBEN EINES ELEKTRISCHEN SYSTEMS**

(30) Priorität: 02.12.2019 DE 102019218678
(71) Anmelder: Bombardier Transportation GmbH, 10785 Berlin (DE)
(72) Erfinder: Harnack, Lars, 13505 Berlin (DE)
(74) Vertreter: Ramrath, Lukas

(57) **Zusammenfassung**

Die Erfindung betrifft ein elektrisches System zur Energieversorgung in einem Schienenfahrzeug, mit mindestens einem nicht angetriebenen Rad (6), wobei das elektrische System mindestens eine Generatoreinrichtung (2) und mindestens eine Anschlusseinrichtung (3, 3a, 3b) für mindestens ein Bordnetz (4, 4a, 4b) des Schienenfahrzeugs (1) umfasst, wobei die Generatoreinrichtung (2) mit dem nicht angetriebenen Rad (6) derart mechanisch verbindbar ist, dass bei Drehung des nicht angetriebenen Rads (6) durch die Generatoreinrichtung (2) elektrische Energie erzeugbar ist, die über die Anschlusseinrichtung (3, 3a, 3b) in das Bordnetz (4, 4a, 4b) übertragbar ist.

## Beschreibung

Die Erfindung betrifft ein elektrisches System zur Energieversorgung in einem Schienenfahrzeug, ein solches Schienenfahrzeug sowie ein Verfahren zum Betreiben eines solchen elektrischen Systems.

Aus der DE 10 2018 209 583 A1 (nachveröffentlicht) bekannt ist ein Verbund aus wenigstens zwei Fahrzeugen, wobei zumindest eines der Fahrzeuge einen aus einer Energiequelle mit elektrischer Energie speisbaren Gleichspannungs-Zwischenkreis aufweist, an den zumindest ein Motorstromrichter angeschlossen ist, der wiederum mit zumindest einer Antriebsmaschine elektrisch verbunden ist, wobei weiter beschrieben wird, dass ein Generatorbetrieb der zumindest einen Antriebsmaschine aktiviert werden kann, wenn eine Störung der Speisung des Gleichspannungs-Zwischenkreises des ersten Fahrzeugs festgestellt wird.

Weiter bekannt sind Bordnetzwerke von Fahrzeugen, über die elektrische Verbraucher des Fahrzeugs, die typischerweise keine unmittelbaren Komponenten oder Bestandteile eines Antriebsnetzwerkes bilden, versorgt werden. Derartige Verbraucher können z.B. Beleuchtungseinrichtungen, Heizungseinrichtungen, Klimatisierungseinrichtungen oder weitere Verbraucher sein.

Generell ist eine dauerhafte Energieversorgung dieser Verbraucher über das Bordnetz erwünscht, insbesondere auch dann, wenn keine fahrzeugexterne Energieversorgung, z.B. in Form einer Energieversorgung über eine Oberleitung, oder eine Energieversorgung durch den Betrieb einer Antriebseinrichtung, z.B. einer Antriebsmaschine, des Fahrzeugs erfolgt. So ist es beispielsweise wünschenswert, eine Klimatisierungseinrichtung auch dann zu betreiben, wenn das Fahrzeug still steht und, im Falle eines Schienenfahrzeugs, keine Energieversorgung über die Oberleitung möglich ist, z.B. in einem Depot oder Bahnhof.

Weiter bekannt ist, dass für ein derartiges Szenario ein Stromerzeugungsaggregat mit einer Verbrennungskraftmaschine und einer Generatoreinrichtung genutzt wird, um dann elektrische Energie zur Versorgung des Bordnetzes zu erzeugen.

Nachteilig hierbei ist der hohe Bauraumbedarf solcher Stromerzeugungsaggregate sowie eine unerwünscht hohe Lärm- und Abgasbelastung.

Es stellt sich daher das technische Problem, ein elektrisches System zur Energieversorgung in einem Schienenfahrzeug, ein Schienenfahrzeug und ein Verfahren zum Betreiben eines solchen elektrischen Systems zu schaffen, wobei ein Bauraumbedarf sowie eine Lärm- und Abgasemission eines solchen elektrischen Systems gering ist.

Die Lösung des technischen Problems ergibt sich durch die Gegenstände mit den Merkmalen der unabhängigen Ansprüche. Weitere vorteilhafte Ausgestaltungen der Erfindung ergeben sich durch die Unteransprüche.

Vorgeschlagen wird ein elektrisches System zur Energieversorgung in einem Fahrzeug. Das elektrische System kann insbesondere zur Energieversorgung von an ein Bordnetz des Fahrzeugs angeschlossenen Verbrauchern dienen. Das Fahrzeug ist Schienenfahrzeug, insbesondere ein lokbespanntes Schienenfahrzeug.
Auch kann das Fahrzeug ein Teil eines Zuges sein. Ein solches Zugteil kann beispielsweise ein Triebwagen oder eine Lokomotive des Schienenfahrzeugs sein. Bevorzugt jedoch ist der Zugteil ein Mittelwagen, insbesondere ein Fahrgastwagen, des Schienenfahrzeugs.

Das Fahrzeug umfasst mindestens ein nicht angetriebenes Rad. Ein nicht angetriebenes Rad bezeichnet hierbei ein Rad, über welches keine Antriebskräfte/Antriebsmomente zum Antrieb des Fahrzeugs auf eine Fahrbahn bzw. eine Schiene übertragen werden. Ein angetriebenes Rad hingegen bezeichnet ein Rad, welches mechanisch mit einer Antriebseinrichtung, beispielsweise einer elektrischen Maschine oder einer Verbrennungskraftmaschine, mechanisch verbunden ist, z.B. über ein entsprechendes Getriebe, um von der Antriebseinrichtung erzeugte Antriebskräfte/Antriebsmomente auf eine Fahrbahn bzw. eine Schiene zu übertragen.

Das vorgeschlagene elektrische System umfasst mindestens eine Generatoreinrichtung. Diese dient der Erzeugung von elektrischer Energie, insbesondere durch die Umwandlung von mechanischer in elektrische Energie. Die Generatoreinrichtung kann insbesondere als elektrische Maschine, insbesondere als Synchron- oder Asynchronmaschine ausgebildet sein. Die Generatoreinrichtung ist hierbei jedoch von einer Traktionsmaschine, also einer Einrichtung zur Erzeugung einer Antriebskraft für das Fahrzeug, verschieden.

Weiter umfasst das elektrische System mindestens eine Anschlusseinrichtung für mindestens ein Bordnetz des Fahrzeugs. Die Anschlusseinrichtung kann eine elektrische Anschlusseinrichtung sein, über die elektrische Energie übertragbar ist. Das Bordnetz des Fahrzeugs kann hierbei ein Netz zur elektrischen Energieversorgung von Verbrauchern des Fahrzeugs, insbesondere sogenannten Hilfsverbrauchern des Fahrzeugs, sein. Derartige Hilfsverbraucher wurden vorhergehend erläutert und umfassen insbesondere Beleuchtungseinrichtungen, Heizeinrichtungen oder Klimatisierungseinrichtungen. Diese Hilfsverbraucher können hierbei an das Bordnetz des Fahrzeugs angeschlossen werden. Selbstverständlich ist es auch vorstellbar, dass das elektrische System mehrere Anschlusseinrichtungen umfasst, beispielsweise Anschlusseinrichtungen für verschiedene Spannungsarten und/oder -niveaus. Weiter ist es vorstellbar, dass über die Anschlusseinrichtung auch elektrische Energie vom Bordnetz in das elektrische System übertragen werden kann. Dies wird nachfolgend noch näher erläutert.

Weiter ist die Generatoreinrichtung mit dem nicht angetriebenen Rad des Fahrzeugs derart mechanisch verbindbar, dass bei Drehung des nicht angetriebenen Rads durch die Generatoreinrichtung elektrische Energie erzeugbar ist, die über die Anschlusseinrichtung in das Bordnetz übertragbar ist.

Es ist möglich, dass das nicht angetriebene Rad dauerhaft mechanisch mit der Generatoreinrichtung mechanisch verbunden ist, insbesondere über geeignete mechanische Verbindungselemente wie z.B. ein Getriebe. Allerdings ist es auch möglich, dass die Generatoreinrichtung lösbar mit dem nicht angetriebenen Rad mechanisch verbunden ist, beispielsweise über eine Kupplungseinrichtung.

Durch das vorgeschlagene elektrische System ergibt sich in vorteilhafter Weise, dass eine lärm- und abgasemissionsarme Erzeugung von elektrischer Energie zur Versorgung von Hilfsverbrauchern im Bordnetz ermöglicht wird. So kann bei einer Fahrt des Fahrzeugs und somit bei einer Rotation des nicht angetriebenen Rads elektrische Energie erzeugt und über die Anschlusseinrichtung bereitgestellt werden. Aufgrund der geringen Bauraumanforderungen von elektrischen Generatoreinrichtungen wird ferner ein Bauraumbedarf des elektrischen Systems im Fahrzeug reduziert.

In einer weiteren Ausführungsform umfasst das elektrische System mindestens eine Energiespeichereinrichtung, insbesondere einen als Akkumulator ausgebildete Energiespeichereinrichtung. Weiter ist die Generatoreinrichtung mit der Energiespeichereinrichtung verbunden. Von der Generatoreinrichtung erzeugte elektrische Energie kann in der Energiespeichereinrichtung gespeichert werden. Weiter ist über die Anschlusseinrichtung die in der Energiespeichereinrichtung gespeicherte elektrische Energie in das Bordnetz übertragbar. Vorstellbar ist aber auch, dass über die Anschlusseinrichtung elektrische Energie aus dem Bordnetz in die Energiespeichereinrichtung zum Laden derselben übertragbar ist.

Hierdurch ergibt sich in vorteilhafter Weise eine zuverlässige elektrische Energieversorgung von Hilfsverbrauchern im Bordnetz, die auch bei Stillstand des Fahrzeugs gewährleistet ist.

In einer weiteren Ausführungsform umfasst das Fahrzeug mindestens einen Motorraum für mindestens ein Stromerzeugungsaggregat, welches eine Verbrennungskraftmaschine und eine weitere Generatoreinrichtung umfasst. Weiter ist die Energiespeichereinrichtung in dem Motorraum angeordnet. Es ist vorstellbar, dass das Fahrzeug auch das Stromerzeugungsaggregat umfasst, wobei in einem solchen Fall zusätzlich zu dem Stromerzeugungsaggregat auch die Energiespeichereinrichtung in dem Motorraum angeordnet ist. Es ist allerdings auch vorstellbar, dass die Energiespeichereinrichtung ein bisher vorhandenes Stromerzeugungsaggregat ersetzt.

Hierdurch ergibt sich in vorteilhafter Weise ein einfaches Nachrüsten des elektrischen Systems zur Energieversorgung in das Fahrzeug, da ein vorhandener Raum für die Anordnung der Energiespeichereinrichtung und somit eines Teils des elektrischen Systems genutzt werden kann.

In einer alternativen Ausführungsform umfasst das Fahrzeug mindestens einen Motorraum für mindestens ein Stromerzeugungsaggregat, welches eine Verbrennungskraftmaschine und eine weitere Generatoreinrichtung umfasst, wobei die Energiespeichereinrichtung außerhalb des Motorraums angeordnet ist. In diesem Fall ist es insbesondere möglich, dass die Energiespeichereinrichtung in einem Unterflurbereich, also unter eine Bodenfläche des Fahrzeugs, angeordnet ist. Insbesondere in dem Fall, in dem das Fahrzeug das Stromerzeugungsaggregat umfasst, ergibt sich hiermit eine einfache Integration in ein solches Fahrzeug, wobei gleichzeitig eine zuverlässige Energieversorgung gewährleistet wird, da als redundante Energieerzeugungsmöglichkeit das Stromerzeugungsaggregat entsprechend betrieben werden kann.

In einer weiteren Ausführungsform umfasst das elektrische System mindestens einen Stromrichter, wobei die Generatoreinrichtung über den Stromrichter mit der Energiespeichereinrichtung oder mit der Anschlusseinrichtung verbunden ist. Der Stromrichter kann insbesondere als Gleichrichter ausgebildet sein, insbesondere als passiver Gleichrichter. Es ist möglich, dass die Generatoreinrichtung über den Stromrichter mit der Energiespeichereinrichtung und die Energiespeichereinrichtung dann mit der Anschlusseinrichtung verbunden ist. Allerdings ist es auch vorstellbar, dass die Generatoreinrichtung über den Stromrichter direkt mit der Anschlusseinrichtung verbunden ist. Weiter ist es möglich, dass die Generatoreinrichtung über einen ersten Stromrichter mit der Energiespeichereinrichtung und diese dann mit einer ersten Anschlusseinrichtung verbunden ist, wobei die Generatoreinrichtung über einen weiteren Stromrichter mit einer weiteren Anschlusseinrichtung verbunden ist. Der Stromrichter ist hierbei aber insbesondere von einem Traktions-Stromrichter verschieden.

Es ist ferner vorstellbar, dass das Energieversorgungssystem mehrere Stromrichter umfasst, wobei z.B. die Generatoreinrichtung über einen ersten Stromrichter mit der Energiespeichereinrichtung und diese Energiespeichereinrichtung über einen weiteren Stromrichter mit der Anschlusseinrichtung verbunden ist. Weiter ist es möglich, dass die Energiespeichereinrichtung über verschiedene Stromrichter mit verschiedenen Anschlusseinrichtungen verbunden ist.

Hierdurch ergibt sich in vorteilhafter Weise eine zuverlässige Bereitstellung der elektrischen Energie, da diese durch den Stromrichter mit gewünschten Eigenschaften, beispielsweise einer gewünschten Amplitude, bereitgestellt werden kann.

In einer weiteren Ausführungsform umfasst das elektrische System mindestens eine Wechselstrom-Anschlusseinrichtung und mindestens eine Gleichstromanschlusseinrichtung. Hierbei kann die Wechselstrom-Anschlusseinrichtung über einen Wechselrichter mit der Energiespeichereinrichtung verbunden sein. Die mindestens eine Gleichstrom-Anschlusseinrichtung kann hierbei direkt mit der Energiespeichereinrichtung oder über einen weiteren Stromrichter mit der Energiespeichereinrichtung verbunden sein. Hierdurch ergibt sich in vorteilhafter Weise, dass verschiedene Spannungsarten, nämlich Wechsel- und Gleichspannung, für verschiedene Hilfsverbraucher im Bordnetz bereitgestellt werden können.

In einer weiteren Ausführungsform ist eine von der Generatoreinrichtung erzeugte Leistung einstellbar. Hierdurch kann in vorteilhafter Weise eine Bremskraft für das nicht angetriebene Rad erzeugt und in der Höhe verändert werden, womit die Generatoreinrichtung auch als Nutzbremse beim Betrieb des Fahrzeugs genutzt werden kann.

In einer weiteren Ausführungsform ist die Generatoreinrichtung Teil eines Drehgestells des Fahrzeugs. In diesem Fall ist das Fahrzeug insbesondere ein Schienenfahrzeug. Dass die Generatoreinrichtung Teil eines Drehgestells ist, kann insbesondere bedeuten, dass die Generatoreinrichtung fest im Drehgestell verbaut ist. Dies wiederum kann bedeuten, dass die Generatoreinrichtung mechanisch ortsfest an einem Rahmen des Drehgestells angeordnet sein kann.

Hierdurch ergibt sich in vorteilhafter Weise eine möglichst wenig Bauraum erfordernde Integration der zusätzlichen Generatoreinrichtung in das Fahrzeug.

Weiter vorgeschlagen wird ein Schienenfahrzeug mit einem elektrischen System gemäß einer der in dieser Offenbarung beschriebenen Ausführungsform. Wie vorhergehend erläutert, kann das Fahrzeug insbesondere ein Zugteil eines Schienenfahrzeugs sein.

Das Fahrzeug kann hierbei zusätzlich mindestens einen Hilfsverbraucher umfassen, wobei dieser an ein Bordnetz des Fahrzeugs angeschlossen sein kann. Das Bordnetz wiederum kann an die mindestens eine Anschlusseinrichtung des elektrischen Systems angeschlossen sein. Weiter kann das Fahrzeug eine Traktionsmaschine umfassen.

Hierdurch ergibt sich in vorteilhafter Weise ein Fahrzeug, in dem Hilfsverbraucher möglichst lärm- und abgasemissionsfrei mit elektrischer Energie versorgt werden können, wobei gleichzeitig ein Bauraum des Fahrzeugs reduziert ist.

Weiter vorgeschlagen wird ein Verfahren zum Betreiben eines elektrischen Systems zur Energieversorgung in einem Fahrzeug. Das elektrische System kann entsprechend einer der in dieser Offenbarung beschriebenen Ausführungsformen ausgeführt sein.

In dem Verfahren wird die elektrische Generatoreinrichtung mit dem nicht angetriebenen Rad des Fahrzeugs derart mechanisch verbunden, dass bei Drehung des nicht angetriebenen Rads durch die elektrische Generatoreinrichtung elektrische Energie erzeugt wird, wobei weiter das Bordnetz an die Anschlusseinrichtung angeschlossen wird. In diesem Fall kann also elektrische Energie aus dem elektrischen System, beispielsweise direkt von der Generatoreinrichtung oder aus einer von der Generatoreinrichtung geladenen elektrischen Speichereinrichtung in das Bordnetz, insbesondere zu einem an das Bordnetz angeschlossenen Hilfsverbraucher, übertragen werden.

Es ist weiter möglich, dass die von der Generatoreinrichtung während einer Drehung des Rades erzeugte elektrische Leistung auf einen gewünschten Wert eingestellt wird. Dieser gewünschte Wert kann insbesondere abhängig von einer gewünschten Bremskraft für das nicht angetriebene Rad eingestellt werden. Dies kann insbesondere durch eine Steuer- und Auswerteeinrichtung des Fahrzeugs erfolgen.

Weiter kann das Fahrzeug mindestens ein Drehgestell umfassen. In diesem Fall kann die Generatoreinrichtung Teil des Drehgestells sein.

Vorteile bezüglich des vorgeschlagenen Verfahrens wurden in Bezug auf das vorgeschlagene elektrische System vorhergehend bereits erläutert.

Die Erfindung wird anhand von Ausführungsbeispielen näher erläutert. Die Figuren zeigen:
- Fig. 1: eine schematische Ansicht eines Fahrzeugs mit einem vorgeschlagenen elektrischen System,
- Fig. 2a: ein schematisches Blockschaltbild eines vorgeschlagenen elektrischen Systems im ersten Zustand,
- Fig. 2b: ein schematisches Blockschaltbild des in Fig. 2a dargestellten elektrischen Systems in einem weiteren Zustand,
- Fig. 3: eine schematische Seitenansicht eines Drehgestells und
- Fig. 4: eine schematische Seitenansicht eines erfindungsgemäßen Schienenfahrzeugs.

Nachfolgend bezeichnen gleiche Bezugszeichen Elemente mit gleichen oder ähnlichen technischen Merkmalen.

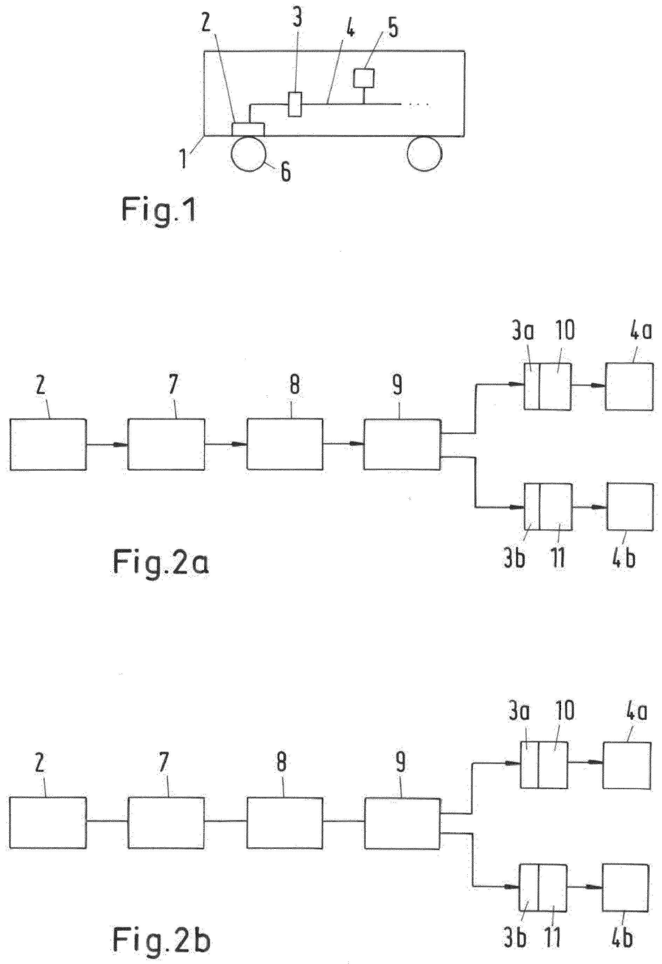

In Fig. 1 ist eine schematische Ansicht eines Fahrzeugs 1 mit einem elektrischen System zur Energieversorgung dargestellt. Das elektrische System umfasst eine z.B. als elektrische Maschine ausgebildete Generatoreinrichtung 2 sowie eine Anschlusseinrichtung 3 für ein Bordnetz 4 des Fahrzeugs 1. Die Anschlusseinrichtung 3 kann beispielsweise eine Steckverbindung zur Herstellung einer elektrischen Verbindung zwischen dem elektrischen System und dem Bordnetz 4 ermöglichen.

Weiter dargestellt ist ein Hilfsverbraucher 5 im Fahrzeug 1, der beispielsweise eine Beleuchtungseinrichtung, beispielsweise eine LED-Leuchte, oder eine Heizeinrichtung oder eine Klimatisierungseinrichtung sein kann.

Weiter dargestellt ist ein nicht angetriebenes Rad 6 des Fahrzeugs 1. Dieses ist über eine nicht dargestellte mechanische Verbindung derart mit der Generatoreinrichtung 2 verbindbar, dass im verbundenen Zustand bei Drehung des nicht angetriebenen Rads 6 durch die Generatoreinrichtung 2 elektrische Energie erzeugbar ist, die dann über die Anschlusseinrichtung 3 in das Bordnetz 4 übertragbar ist. Somit kann der Hilfsverbraucher 5 mit elektrischer Energie versorgt werden.

Fig. 2a zeigt ein schematisches Flussdiagramm eines erfindungsgemäßen elektrischen Systems 1. Dargestellt ist ein erster Zustand, in dem elektrische Energie von der Generatoreinrichtung 2 erzeugt wird. In Fig. 2a und in Fig. 2b ist ein Energiefluss und seine Richtung durch Pfeile symbolisiert. Das elektrische System umfasst neben der Generatoreinrichtung 2 einen ersten Stromrichter 7, der beispielsweise als Dreiphasen-Umrichter und Gleichrichter ausgebildet sein kann. Weiter umfasst das elektrische System eine Batterieladeeinrichtung 8 sowie eine als Batterie ausgebildete Energiespeichereinrichtung 9. Die Generatoreinrichtung 2 ist hierbei über eine Reihenschaltung von dem ersten Stromrichter 7 und dem Batterieladegerät 8 mit der Energiespeichereinrichtung 9 verbunden. Die Energiespeichereinrichtung 9 wiederum ist über einen zweiten Stromrichter 10, der beispielsweise als Wechselrichter ausgebildet sein kann, mit einer ersten Anschlusseinrichtung 3a verbunden, an die ein erstes Bordnetz 4a des Fahrzeugs 1 (siehe Fig. 1) angeschlossen ist. Das erste Bordnetz 4a kann beispielsweise ein Bordnetz mit einer mit einer Wechselbetriebsspannung von 400 V (AC) sein.

Weiter ist die Energiespeichereinrichtung 9 über einen dritten Stromrichter 11, der beispielsweise als Hochsetz- oder Tiefsetzsteller ausgebildet sein kann, mit einer weiteren Anschlusseinrichtung 3b verbunden, an die ein weiteres Bordnetz 4b des Fahrzeugs 1 angeschlossen ist, welches beispielsweise ein Gleichspannungsnetz mit einer Spannungshöhe von 110 V sein kann.

In dem in Fig. 2a dargestellten Zustand wird elektrische Energie von der Generatoreinrichtung 2 erzeugt und über den ersten Stromrichter 7, das Batterieladegerät 8 in die Energiespeichereinrichtung 9 übertragen. Aus dieser wird elektrische Energie über die Anschlusseinrichtungen 3a, 3b in die Bordnetze 4a, 4b und an daran angeschlossene Hilfsverbraucher 5 übertragen.

Fig. 2b zeigt das in Fig. 2a dargestellte elektrische System in einem weiteren Zustand, in dem die Generatoreinrichtung 2 keine elektrische Energie erzeugt, insbesondere im Stillstand des Fahrzeugs 1, wenn sich das nicht angetriebene Rad 6 nicht dreht. In diesem Fall wird keine elektrische Energie von der Generatoreinrichtung 2 zur Energiespeichereinrichtung 9 übertragen. Allerdings werden die Bordnetze 4a, 4b, wie vorhergehend erläutert, über die Stromrichter 10, 11 mit elektrischer Energie aus der Energiespeichereinrichtung 9 versorgt.

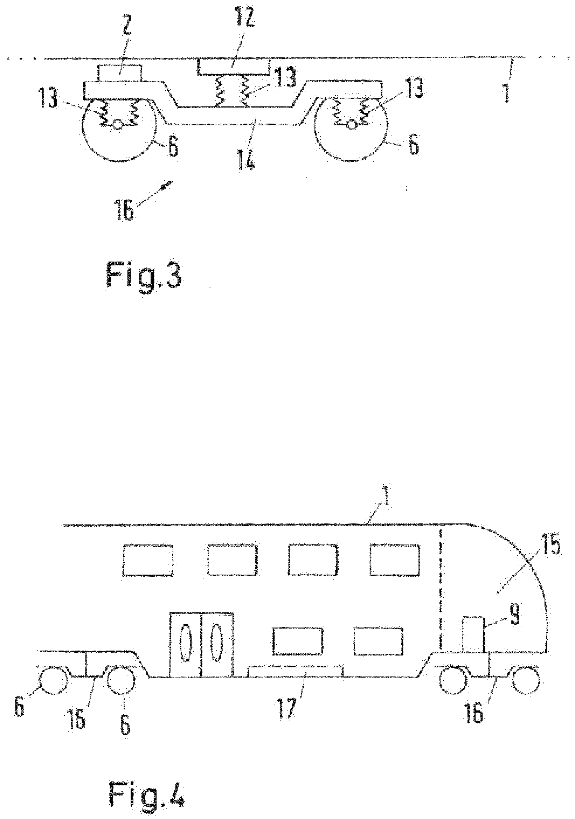

Fig. 3 zeigt ein Drehgestell 16 eines Fahrzeugs 1, insbesondere eines Schienenfahrzeugs. Das Drehgestell 16 umfasst hierbei eine Drehpfanne mit einer Wiege 12, Federelemente 13 sowie einen Rahmen 14. Nicht angetriebene Räder 6 sind drehbar an dem Rahmen 14 gelagert. Ferner dargestellt ist eine Generatoreinrichtung 2, die Teil des Drehgestells 16 ist. Diese kann insbesondere ortsfest am Wagen 14 befestigt sein. Weiter kann diese Generatoreinrichtung 2 wie vorhergehend erläutert derart mechanisch mit dem nicht angetriebenen Rad 6 verbunden sein, dass bei Drehung des nicht angetriebenen Rads 6 durch diese Generatoreinrichtung 2 elektrische Energie erzeugbar ist.

Fig. 4 zeigt eine schematische Seitenansicht eines Schienenfahrzeugs 1, welches als Doppelstock-Schienenfahrzeug ausgebildet ist. Dargestellt ist ein Motorraum 15 sowie Drehgestelle 16 des Schienenfahrzeugs 1 mit nicht angetriebenen Rädern 6.

Es ist möglich, dass die Energiespeichereinrichtung 9 hierbei in dem Motorraum 15 angeordnet ist, insbesondere zusätzlich oder alternativ zu einem Stromerzeugungsaggregat, welches eine Verbrennungskraftmaschine und eine weitere Generatoreinrichtung (nicht dargestellt) umfasst.

Ebenfalls ist es möglich, dass die Energiespeichereinrichtung 9 in einem Unterbodenbereich 17 des Schienenfahrzeugs 1 angeordnet ist, insbesondere wenn im Motorraum 15 das erläuterte Stromerzeugungsaggregat angeordnet ist.

Es ist weiter möglich, dass das Fahrzeug 1 eine Anschlusseinrichtung zum Anschluss an eine externe, elektrische Energieversorgung, beispielsweise ein Energieversorgungsnetz, aufweist. Eine solche Anschlusseinrichtung kann beispielhaft als Stromabnehmer ausgebildet sein. Es ist weiter möglich, dass diese Anschlusseinrichtung elektrisch mit der Energiespeichereinrichtung 9 des elektrischen Systems verbunden ist. In diesem Fall kann also die Energiespeichereinrichtung 9 sowohl durch den Betrieb der Generatoreinrichtung 2 als auch über die erläuterte Anschlusseinrichtung aus der externen Energieversorgung mit elektrischer Energie geladen werden.

Es ist weiter möglich, dass die Generatoreinrichtung 2, insbesondere eine als elektrische Maschine ausgebildete Generatoreinrichtung, auch in einem motorischen Betriebsmodus betrieben wird, wozu z.B. elektrische Energie aus der Energiespeichereinrichtung 9 durch die im motorischen Betriebsmodus betriebene Generatoreinrichtung 2 in mechanische Energie umgewandelt wird. Dies kann als Hilfsantrieb für das Fahrzeug 1 genutzt werden.

### Bezugszeichenliste

- 1: Fahrzeug
- 2: Generatoreinrichtung
- 3: Anschlusseinrichtung
- 3a: erste Anschlusseinrichtung
- 3b: erste Anschlusseinrichtung
- 4: Bordnetz
- 4a: erstes Bordnetz
- 4b: zweites Bordnetz
- 5: Hilfsverbraucher
- 6: nicht angetriebenes Rad
- 7: erster Stromrichter
- 8: Batterieladegerät
- 9: Energiespeichereinrichtung
- 10: zweiter Stromrichter
- 11: dritter Stromrichter
- 12: Drehpfanne mit Wiege
- 13: Federelement
- 14: Rahmen
- 15: Motorraum
- 16: Drehgestell
- 17: Unterbodenraum

## Patentansprüche

1. Elektrisches System zur Energieversorgung in einem Schienenfahrzeug mit mindestens einem nicht angetriebenen Rad (6), wobei das elektrische System mindestens eine Generatoreinrichtung (2) und mindestens eine Anschlusseinrichtung (3, 3a, 3b) für mindestens ein Bordnetz (4, 4a, 4b) des Schienenfahrzeugs (1) umfasst, wobei die Generatoreinrichtung (2) mit dem nicht angetriebenen Rad (6) derart mechanisch verbindbar ist, dass bei Drehung des nicht angetriebenen Rads (6) durch die Generatoreinrichtung (2) elektrische Energie erzeugbar ist, die über die Anschlusseinrichtung (3, 3a, 3b) in das Bordnetz (4, 4a, 4b) übertragbar ist.

2. Elektrisches System nach Anspruch 1, **dadurch gekennzeichnet, dass** das elektrische System mindestens eine Energiespeichereinrichtung (9) umfasst, wobei die Generatoreinrichtung (2) mit der Energiespeichereinrichtung (9) verbunden ist, wobei über die Anschlusseinrichtung (3, 3a, 3b) die in der Energiespeichereinrichtung (9) gespeicherte elektrische Energie in das Bordnetz (4, 4a, 4b) übertragbar ist.

3. Elektrisches System nach Anspruch 2, **dadurch gekennzeichnet, dass** das Schienenfahrzeug (1) mindestens einen Motorraum (15) für mindestens ein Stromerzeugungsaggregat, welches eine Verbrennungskraftmaschine und eine weitere Generatoreinrichtung umfasst, umfasst, wobei die Energiespeichereinrichtung (9) in dem Motorraum (15) angeordnet ist.

4. Elektrisches System nach Anspruch 2, **dadurch gekennzeichnet, dass** das Schienenfahrzeug (1) mindestens einen Motorraum (15) für mindestens ein Stromerzeugungsaggregat, welches eine Verbrennungskraftmaschine und eine weitere Generatoreinrichtung umfasst, umfasst, wobei die Energiespeichereinrichtung (9) außerhalb des Motorraums (15) angeordnet ist.

5. Elektrisches System nach einem der vorangegangenen Ansprüche, **dadurch gekennzeichnet, dass** das elektrische System mindestens einen Stromrichter (7, 10, 11) umfasst, wobei die Generatoreinrichtung (2) über den Stromrichter (7, 10, 11) mit der Energiespeichereinrichtung (9) oder mit der Anschlusseinrichtung (3, 3a, 3b) verbunden ist.

6. Elektrisches System nach einem der vorangegangenen Ansprüche, **dadurch gekennzeichnet, dass** das elektrische System mindestens eine Wechselstrom-Anschlusseinrichtung und mindestens eine Gleichstrom-Anschlusseinrichtung umfasst.

7. Elektrisches System nach einem der vorangegangenen Ansprüche, **dadurch gekennzeichnet, dass** eine von der Generatoreinrichtung (2) erzeugte Leistung einstellbar ist.

8. Elektrisches System nach einem der vorangegangenen Ansprüche, **dadurch gekennzeichnet, dass** die Generatoreinrichtung (2) Teil eines Drehgestells (16) des Schienenfahrzeugs ist.

9. Schienenfahrzeug mit einem elektrischen System gemäß einem der Ansprüche 1 bis 8.

10. Verfahren zum Betreiben eines elektrisches Systems zur Energieversorgung in einem einem Schienenfahrzeug, mit mindestens einem nicht angetriebenen Rad (6), wobei das elektrische System mindestens eine Generatoreinrichtung (2) und mindestens eine Anschlusseinrichtung (3, 3a, 3b) für mindestens ein Bordnetz (4, 4a, 4b) des Schienenfahrzeugs (1) umfasst, wobei die Generatoreinrichtung (2) mit dem nicht angetriebenen Rad (6) derart mechanisch verbunden wird, dass bei Drehung des nicht angetriebenen Rads (6) durch die Generatoreinrichtung (2) elektrische Energie erzeugt wird, wobei weiter das Bordnetz (4, 4a, 4b) an die Anschlusseinrichtung (3, 3a, 3b) angeschlossen wird.
